Europäisches Patentamt

European Patent Office

Office européen des brevets

(11) Numéro de publication: **0 292 380**
**A1**

(12) # DEMANDE DE BREVET EUROPEEN

(21) Numéro de dépôt: **88401199.0**

(22) Date de dépôt: **18.05.88**

(51) Int. Cl.4: **H 01 R 25/16**

(30) Priorité: **20.05.87 FR 8707050**

(43) Date de publication de la demande:
**23.11.88 Bulletin 88/47**

(84) Etats contractants désignés:
**BE CH DE ES IT LI NL**

(71) Demandeur: **LA TELEMECANIQUE ELECTRIQUE**
**33 bis, avenue du Maréchal Joffre B.P. 204**
**F-92002 Nanterre Cédex (FR)**

(72) Inventeur: **Moreux, Alain**
**47 rue Hoche**
**F-21000 Dijon (FR)**

(74) Mandataire: **Bouju, André**
**Cabinet Bouju 38 avenue de la Grande Armée**
**F-75017 Paris (FR)**

(54) **Procédé et dispositif de raccordement électrique dans des locaux à plusieurs pièces.**

(57) Dans une pièce (1), des appareillages (6) tels que socles de prise, branchements permanents, sont montés sur une canalisation (3) de guidage des conducteurs d'alimentation.

Dans une pièce mitoyenne (2), prévue pour ne comporter qu'un équipement électrique réduit, un boîtier (18) est fixé sur la cloison mitoyenne (12) et reçoit à travers un passage (13) de la cloison (12) des conducteurs de dérivation (23) connectés aux conducteurs contenus dans la canalisation (3). Un appareillage (6a) de même type que les appareillages (6) de la pièce (1) est monté dans la pièce (2) sur le boîtier (18).

Utilisation pour simplifier l'installation des pièces à points de distribution peu nombreux sans rompre l'harmonie de l'ensemble de l'installation.

FIG.1

EP 0 292 380 A1

**Description**

## Procédé et dispositif de raccordement électrique dans des locaux à plusieurs pièces"

La présente invention concerne un procédé de raccordement électrique dans des locaux à plusieurs pièces.

La présente invention concerne également un dispositif de raccordement électrique, en particulier pour la mise en oeuvre de ce procédé.

On connaît d'après le FR-A-2 457 584 un procédé comprenant les étapes consistant à fixer aux parois murales d'une première au moins des pièces, des canalisations sur lesquelles on fixe des appareillages tels que socles de prise, commutateurs, et appareils consommateurs, que l'on raccorde à des conducteurs installés dans les canalisations, et à monter au moins un autre apareillage tel que socles de prise, commutateurs ou appareils consommateurs, dans une seconde pièce contiguë à la première pièce.

En particulier, selon ce document, les appareillages fixables sur les canalisations comportent des griffes prévues pour venir, à travers des ouvertures appropriées des canalisations, percer les isolants des conducteurs pour réaliser le raccordement électrique sans que les conducteurs aient à être coupés.

Ce procédé est particulièrement avantageux pour équiper des pièces avec de nombreux appareillages du genre précité ou lorsque l'emplacement de ces appareillages n'est pas définitivement établi. Il est par contre d'une mise en oeuvre relativement lourde dans les pièces ne devant être équipées que d'un petit nombre d'appareillages, voire d'un seul appareillage. Dans ce cas, on peut songer à avoir recours à des techniques plus traditionnelles d'installation électrique encastrée. Toutefois, si certaines autres pièces des locaux doivent être équipées de nombreux appareillages, on aboutit soit à perdre dans l'ensemble des locaux les avantages des appareillages à emplacement variable fixés sur canalisations, soit à employer dans les mêmes locaux deux types d'équipment différents en fonction du nombre d'appareillages à prévoir dans les différentes pièces.

Le but de l'invention est de proposer un procédé et un dispositif simples et économiquement avantageux pour équiper une pièce avec un petit nombre d'appareillages de type harmonisé avec ceux d'une installation avec canalistions et appareillages fixés sur celles-ci, réalisée dans au moins une pièce contiguë.

Suivant l'invention, le procédé de raccordement électrique dans des locaux à plusieurs pièces, comprenant les étapes consistant à fixer aux parois murales d'une première au moins des pièces des canalisations sur lesquelles on fixe des appareillages tels que socles de prise, commutateurs, et appareils consommateurs, que l'on raccorde à des conducteurs que l'on a installés dans les canalisations, et à monter au moins un autre appareillage tel que socle de prise, commutateur ou appareil consommateur dans une seconde pièce contiguë à la première pièce, est caractérisé en ce qu'on pratique derrière une canalisation de la première pièce un passage à travers une cloison séparant la première et la seconde pièce, on place un boîtier sur ce passage dans la seconde pièce, on établit à travers le passage une dérivation électrique depuis les conducteurs de ladite canalisation vers le boîtier, et on fixe ledit autre appareillage sur le boîtier avec raccordement électrique de l'autre appareillage avec la dérivation dans le boîtier.

Ainsi, dans la seconde pièce un simple boîtier pouvant avoir des dimensions relativement réduites permet de monter un appareillage harmonisé avec les appareillages montés sur canalisations dans la première pièce. De la sorte, dans la seconde pièce, l'installation est même plus simple et plus facile à réaliser que si on avait recours à des appareillages encastrés dans la paroi.

Selon un autre aspect de l'invention, le dispositif de raccordement électrique, pour raccorder électriquement dans des locaux des conducteurs de distribution électrique et un appareillage tel que socles de prise, commutateurs ou appareils consommateurs, en particulier selon le procédé précité, ce dispositif comprenant une enceinte qui comporte un fond fixable à une paroi des locaux et renferme une embase de branchement adaptée à supporter des raccordements électriques entre d'une part les conducteurs de distribution et d'autre part l'appareillage, l'enceinte portant des moyens de fixation extérieurs de l'appareillage et des moyens pour le passage de pièces de contact entre les raccordements électriques et l'appareillage, est caractérisé en ce que l'enceinte est un boîtier support dont le fond est traversé pa au moins une ouverture pour permettre le passage des conducteurs entre une cavité de la paroi des locaux et l'ambase.

D'autres particularités et avantages de l'invention ressortiront encore de la description ci-après.

Aux dessins annexés donnés à titre d'exemples non limitatifs :

- la figure 1 est une vue schématique partielle de locaux équipés selon l'invention, en coupe horizontale ;

- la figure 2 est une vue partielle en perspective de l'installation dans une première pièce ;

- la figure 3 est une vue du détail III de la figure 1, à échelle agrandie ;

- la figure 4 est une vue en perspective éclatée du boîtier et du socle de prise ;

- la figure 5 est une vue en perspective du boîtier, ouvert ;

- la figure 6 est une vue en perspective éclatée du boîtier ;

- la figure 7 est une vue de face du boîtier, avec arrachement du couvercle ;

- la figure 8 est une vue en perspective du socle de prise monté sur le boîtier ; et

- la figure 9 est une vue partielle, de l'installation d'un second socle de prise à partirf du boîtier, en coupe horizontale.

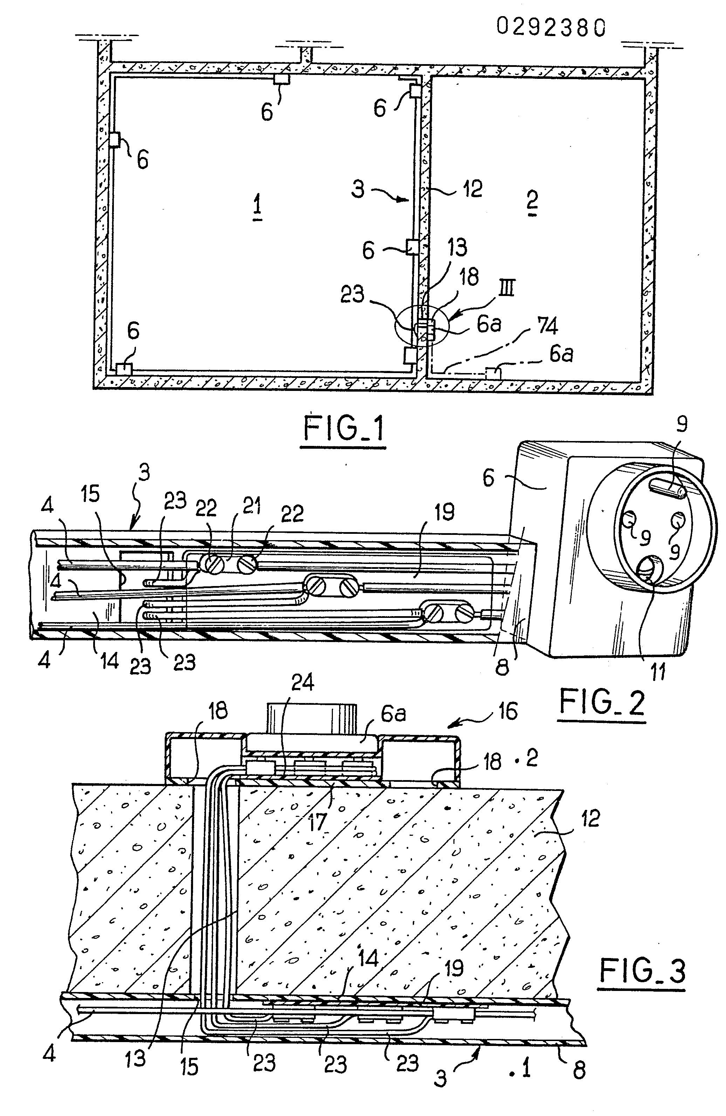

Dans l'exemple représenté à la figure 1, des locaux comprennent une première pièce 1 et une seconde pièce 2, ainsi que d'autres pièces non complètement représentées.

Dans la première pièce 1, on a fixé aux parois murales une canalisation électrique 3, en matière plastique par exemple dans laquelle on a disposé trois conducteurs de distribution électrique 4 (figures 2 et 3), par exemple un conducteur de phase, un conducteur de neutre et un conducteur de terre. Dans des emplacements choisis selon les besoins des utilisateurs, on a monté sur la canalisation 3 des appareillages 6 pouvant être des socles de prise de courant (exemple représenté à la figure 2), des interrupteurs ou encore des branchements permanents d'appareils consommateurs, appareils de chauffage par exemple.

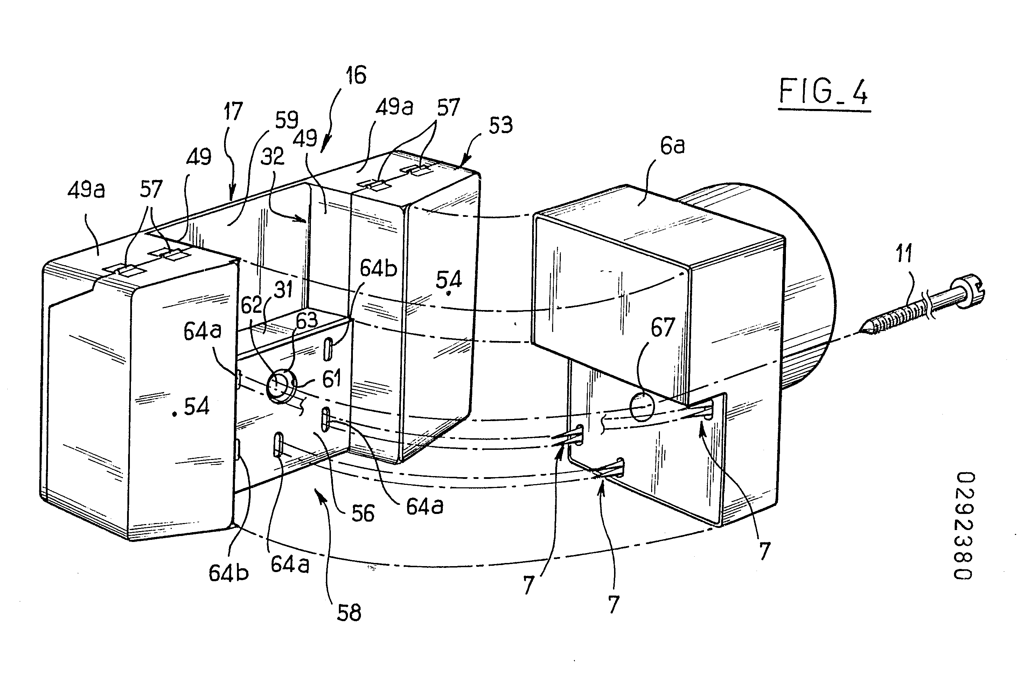

Les appareillages 6 sont par exemple montés sur la canalisation 3 et branchés aux conducteurs 4 qu'elle contient conformément aux techniques décrites dans le FR-A-2 457 584. Un socle de prise de courant 6a approprié pour un tel branchement est représenté à la figure 4. Il comporte sur sa face arrière trois paires de griffes métalliques 7 respectivement pour la phase, le neutre et la terre. Pour monter un tel socle de prise sur la canalisation 3, on place dans la canalisation 3, derrière le conducteur 4, une embase de branchement qui maintient chaque conducteur 4 dans une position bien déterminée. On place ensuite le socle de prise sur la canalisation 2, de la manière représentée à la figure 2, chaque paire de griffes 7 traversant une ouverture du couvercle 8 de la canalisation 3, pour chevaucher l'un des conducteurs 4 en perforant l'isolant de ce conducteur, de manière à se trouver électriquement reliée à l'âme conductrice du conducteur. Dans le socle de prise 6, chaque paire de griffes est reliée à l'un respectif des contacts de branchement 9 offert à l'usager par le socle de prise. Une vis 11 dont la tête est apparente sur la face avant du socle de prise 6, traverse la paroi postérieure du socle 6 par une ouverture 67 et, à travers une ouverture appropriée du couvercle 8 de la canalisation 3, est vissée dans un trou taraudé de l'embase de raccordement prévue à l'intérieur de la canalisation 3, de manière à fixer le socle de prise 6 sur la canalisation 3. Ces dispositions ne seront pas davantage décrites car elles font l'objet du FR - A -2 457 584.

Dans la pièce 2, compte tenu de son utilisation prévue, un seul appareillage, constitué par le socle de prise 6a, est nécessaire.

Comme le montrent les figures 1 à 3, pour installer le socle de prise 6a, on pratique à travers la cloison 12 séparant les pièces 1 et 2 un passage 13 aboutissant derrière la canalisation 3. De préférence, le passage 13 a été pratiqué avant la pose de la canalisation 3 puis la canalisation 3 a été posée de manière à recouvrir le passage 13 du côté de la pièce 1.

De plus, on a pratiqué à travers le fond 14 de la canalisation 3 une ouverture 15 coincidant sensiblement avec le passage 13 de manière que ce dernier communique avec l'intérieur de la canalisation 3.

Dans la pièce 2, on fixe contre la cloison 12 un boîtier 16, en matière plastique isolante, de manière qu'un fond 17 du boîtier 16 soit appliqué contre la cloison 12, tandis que l'une de deux ouvertures 18 prévue à travers ce fond coincide sensiblement avec le passage 13, qui communique ainsi avec l'intérieur du boîtier 16.

Le procédé comprend encore l'étape consistant à établir à travers le passage 13 une dérivation électrique depuis les conducteurs 4 contenus dans la canalisation 3 vers l'intérieur du boîtier 16.

A cet effet, dans l'exemple représenté, on a interposé entre les conducteurs 4 et le fond 14 de la canalisation 3 une platine de dérivation 19 en matière isolante, et portant, de manière électriquement isolée pour chaque conducteur 4, une plaquette conductrice 21 munie de deux bornes de raccordement par serrage 22. Chaque conducteur 4 est interrompu en regard de l'embase 19, chacune de ses extrémités ainsi formées étant serrée dans l'une respective des bornes 22 entre lesquelles la plaquette 21 assure la continuité électrique.

Dans l'une des bornes 22, on a serré en même temps que le conducteur 4, un conducteur de dérivation 23.

Les trois conducteurs de dérivation 23, ainsi reliés électriquement chacun à l'un des conducteurs 4, sont engagés successivement dans l'ouverture 15, le passage 13 et l'ouverture 18 précitée pour aboutir à l'intérieur du boîtier 16. L'autre ouverture 18, inutilisée ici, est prévue pour se trouver en regard du passage 13 et recevoir les conducteurs 23, notamment si la première ouverture 18 est mal placée, par exemple tout près d'un angle de la pièce 2.

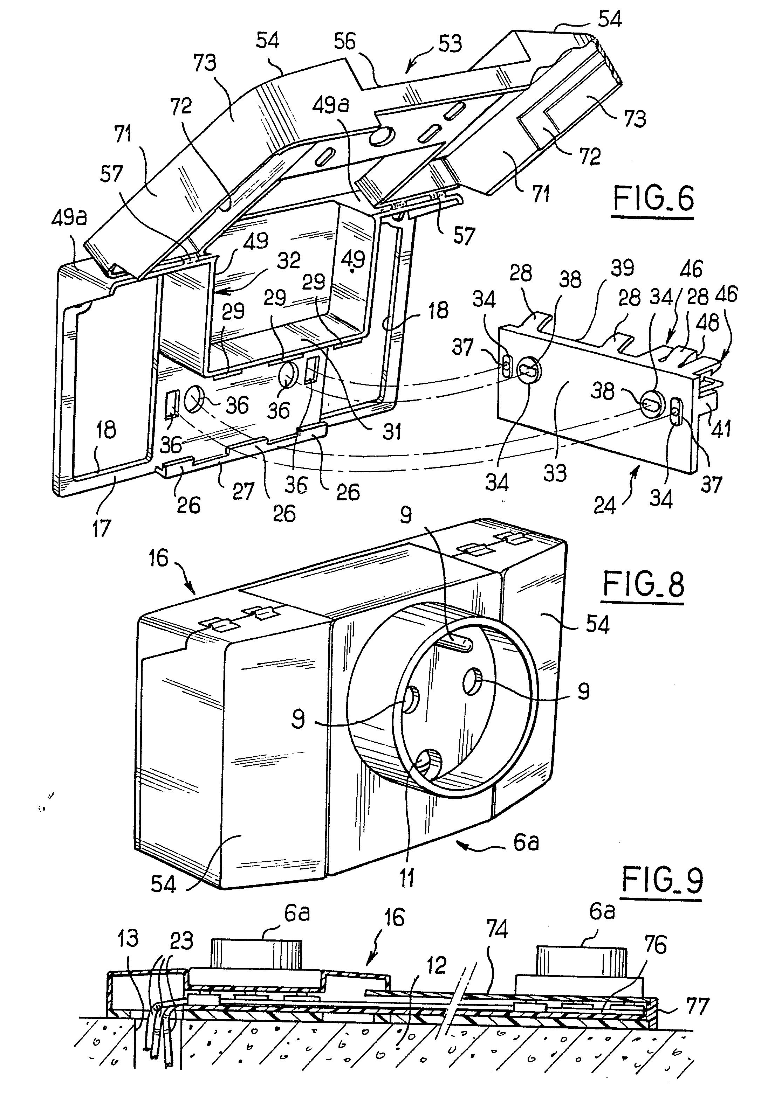

A l'intérieur du boîtier 16, une embase de raccordement 24 est fixée contre le fond 17 (figure 6), entre les deux ouvertures 18. L'embase 24, de forme générale rectangulaire, a en particulir un bord longitudinal engagé sous des becquets 26, portés par un rebord 27 du fond 17, et un bord opposé muni de pattes élastiques 28 (figured 5), dirigées à l'opposé du fond 17 pour s'encliqueter sous des becquets 29 portés par l'aile centrale 31 d'une paroi en U 32 s'étendant entre les ouvertures 18 perpendiculairement au fond 17.

La face 33 (figure 6) que présente l'embase 24 du côté du fond 17 présente quatre bossages 34 qui, lorsque l'embase 24 est fixée contre le fond 17, s'emboîtent dans des trous correspondants 36 du fond 17.

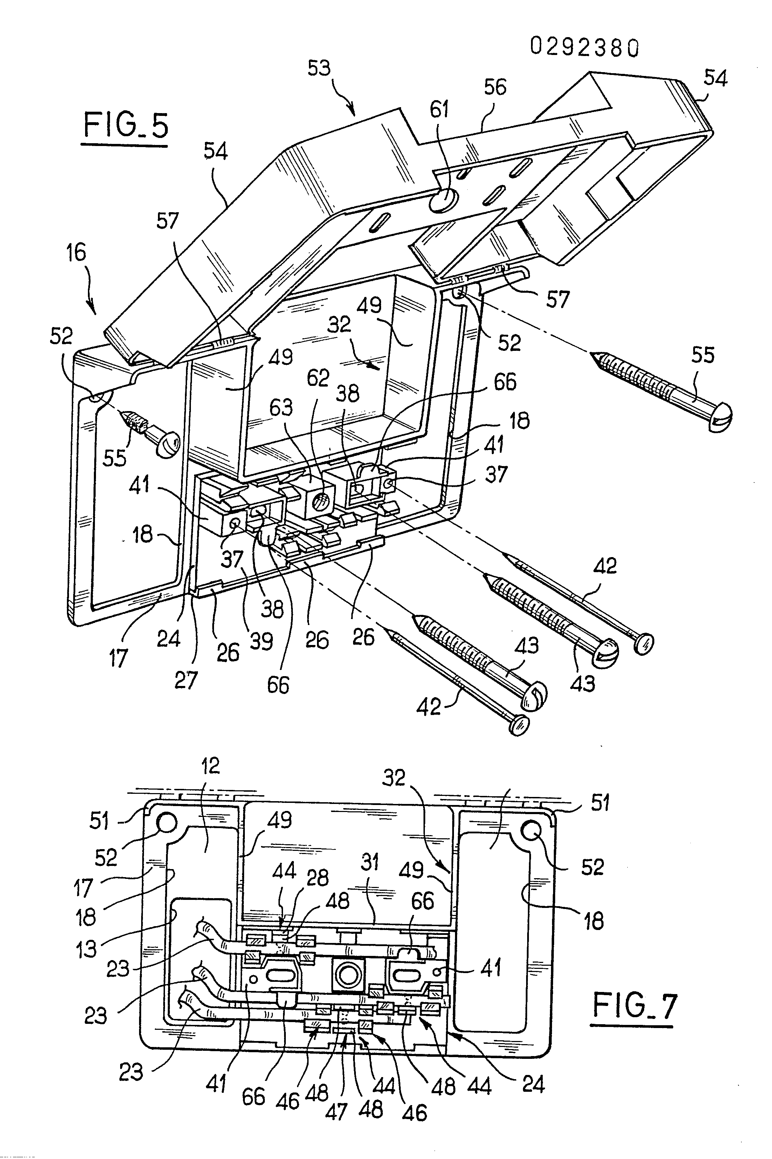

L'embase 24 est traversée par quatre canaux 37, 38 débouchant dans la face 33 à travers les bossages 34 et, dand la face avant 39 (figure 5) opposée à la face 34, à travers des colonnes 41. Les canaux 37 sont adaptés à recevoir des clous 42 de fixation du boîtier 16 contre le mur 12, tandis que les canaux 38 sont adaptés à recevoir dans le même but des vis 43. On choisit en général l'un ou l'autre des ces moyens de fixation 42, 43, lesquels renforcent en même temps la fixation de l'embase 24 dans le boîtier 16.

Par ailleurs, l'embase 24 est sensiblement du type décrit dans le FR-A-2 457 584.

En particulier, comme le montre la figure 7, elle comporte trois systèmes 44 de positionnement de conducteur, chacun de ces systèmes recevant l'un des conducteurs de dérivation 23.

Chaque système 44 comprend deux pinces 46 formées chacune de deux crochets recourbés l'un vers l'autre. Entre les deux pinces 46 de chaque système 44 se trouve un guide de percement d'isolant 47 formé de deux languettes 48 dirigées à l'opposé du fond 17 et destinées à recevoir entre elles la région d'un conducteur 23 s'étendant entre les deux pinces 46. Toutefois, dans deux des trois systèmes 44, l'une des languettes du guide de percement 47 n'est pas réalisée : elle est remplacée par l'une respective des colonnes 41. De plus, dans l'un des deux systèmes 44 précités, l'autre languette du guide de percement 47 forme également la patte élastique 28 de fixation de l'embase 24.

Chaque ouverture 18 s'étend le long de l'une des largeurs de l'embase 24 et le long de l'une respectives des ailes latérales 49 de la paroi en U 32. A partir d'une arête éloignée de l'aile centrale 31, chaque aile latérale 49 se prolonge en direction opposée à l'autre aile 49 par une aile terminale 49a jusqu'à un angle arrondi 51 du fond 17, qui est de forme générale rectangulaire avec ses longueurs parallèles à celles de l'embase 24.

Au voisinage de chacun des angles arrondis 51, le fond 17 présente un perçage 52 qui, comme le montre la figure 5, est adapté à recevoir des vis complémentaires 55 de fixation du boîtier contre la cloison 12.

Le boîtier 16 comprend encore un couvercle 53 comprenant à son tour deux capots latéraux 54 destinés à recouvrir chacun l'une des ouvertures 18 et réunis l'un à l'autre par un capot 56 de recouvrement de l'embase 24. Les deux capots latéraux 54 sont articulés au corps du boîtier comprenant le fond 17 et la paroi en U 32, selon un axe s'étendant selon la longueur du boîtier qui est éloignée de l'embase 24. Pour cela, chaque capot latéral 54 est articulé à l'aile terminale 49a de la paroi 32, au moyen d'une charnière 57.

En position de fermeture, le couvercle 53 complète le corps pour délimiter une enceinte en forme de U dont la région centrale est occupée par l'embase 34.

Comme le montre la figure 4, les deux capots 54 du couvercle 53 en position de fermeture forment saillie de part et d'autre d'un emplacement 58 de fixation de l'appareillage, en l'occurrence le socle de prise 6a.

L'emplacement 58 a donc la forme d'un évidement, et celui-ci est étagé et présente une région surélevée définie par le capot 56 de recouvrement de l'embase, et une région plus profonde définie par le fond 17 dans sa région 59 située à l'intérieur du U formée par la paroi en U 32. La région centrale 31 de la paroi 32 forme épaulement entre la région surélevée définie par le capot 56 et la région 59 du fond 17.

Comme le montre la figure 4, le capot de recouvrement de l'ambase 56 est traversé par cinq ouvertures 64a, 64b. Lorsque le couvercle 53 est fermé, les trois ouvertures 64a sont en regard des guides de perforation 47 prévus sur l'embase 24, tandis que les deux ouvertures 64b sont obturées par des masques 66 portés latéralement par les colonnes 41 ( voir figures 5 et 7).

Le boîtier 16 ayant ainsi été décrit, on va reprendre la description du procédé selon l'invention.

Le boîtier 16 ayant été fixé à la cloison 12 et les conducteurs de dérivation 23 positionnés chacun dans l'un des systèmes de positionnement 44, on ferme le couvercle 53 et, de la manière représentée à la figure 4, on amène l'appareillage 6a dans l'emplacement 58. Vu de l'arrière, comme à la figure 4, l'appareillage 6a a une forme étagée complémentaire de celle de l'emplacement 58. Sa largeur correspond également à celle de l'emplacement 58 entre les deux capots latéraux 54. L'appareillage 6a s'emboîte donc exactement dans l'emplacement 58, tandis que les trois paires de griffes 7 s'engagent chacune à l'intérieur du boîtier 16 à travers l'une respective des ouvertures 64a pour aller s'engager dans l'un des guides de perforation 47, perforer l'isolant du conducteur 23 qui s'y trouve et réaliser ainsi le contact électrique entre le conducteur 23 et l'un des points de branchements 9 du socle de prise 6a.

Parmi les appareillages qu'il est possible de monter ainsi à la place d'un socle de prise 6a, certains ne sont pas reliés à un conducteur de terre. Dans ce cas, comme enseigné par le FR-A-2 457 584 pour le branchement sur canalisation telle que 3, on monte dans le boîtier 16 une embase de type différent ne comportant que deux systèmes 44 dont les guides de perforation d'isolant se trouveront en regard des ouvertures 64b, tandis que trois masques tels que 66 obtureront chacun l'une des ouvertures 64a. L'appareillage alors utilisé ne comportera que deux paires de griffes telles que 7, positionnées en correspondance avec les ouvertures 64b du capot 56.

Comme le montre encore la figure 4, lorsque l'appareillage 6a est engagé dans l'emplacement évidé 58, le trou 67 pour le passage de la vis 11 vient coïncider avec un trou 61 du capot 56, coïncidant lui-même avec le taraudage 62 d'un bossage 63 prévu sur la face 39 de l'embase 24 (figure 5). Ainsi, la vis 11 introduite de manière coulissante depuis la face avant de l'appareillage 6a à travers le trou 67 peut être vissée dans le taraudage 62 pour fixer l'appareillage 6a à l'embase 24 et par conséquent au boîtier 16.

Comme le montre la figure 8, une fois en place, l'appareillage 6a comble l'emplacement 58 entre les deux capots 54 pour former avec le boîtier 16 un solide de forme générale parallélépipédique esthétiquement satisfaisant.

Comme le montre la figure 6, chaque capot latéral 54 a le long de son côté opposé au capot 56 de receouvrement de l'embase, une jupe 71 présentant des amincissements successifs 72, 73, permettant de pratique dans cette jupe par destruction de la région amincie 73 ou par destruction de la région amincie 72 plus grande, englobant la région 73, une échancrure adjacente au fond 17, ayant au choix l'une ou l'autre de deux dimensions possibles pour une canalisation en matière isolante 74 (figure 9).

Comme le montre cette figure, on peut ainsi raccorder l'intérieur du boîtier 16 avec l'intérieur de la canalisation 74 pour monter sur la canalisation 74, à distance du boîtier 16, un autre appareillage 6a pouvant être par exemple un socle de prise ou encore un branchement permanent pour un appareil de chauffage ou analogue.

Dans le cas d'un tel montage, qui est également visualisé en trait mixte à la figure 1, les conducteurs de dérivation 23 sont prévus suffisamment longs pour, au-delà de l'embase 24 du boîtier 16, s'étendre dans la canalisation 74 jusqu'à une embase de branchement 76 montée dans la canalisation 74 pour permettre le montage de l'appareillage 6a de la même manière que les appareillages 6 sont montés sur la canalisation 3 dans la pièce 1.

Si aucun autre appareillage n'est nécessaire dans la pièce 2, l'extrémité de la canalisation 74 est fermée par un bouchon 77.

L'invention n'est pas limitée aux exemples décrits et représentés.

L'embase peut être monobloc avec le boîtier 16. Le boîtier 16 peut ne comporter qu'une seule ouverture telle que 18. Les appareillages tels que 6, 6a peuvent être de toute nature utile dans le cadre d'une installation électrique.

## Revendications

1. Procédé de raccordement électrique dans des locaux à plusieurs pièces (1, 2), comprenant les étapes consistant à fixer aux parois murales d'une première au moins des pièces, des canalisations (3) sur lesquelles se fixent des appareillages (6) tesl que socles de prise, commutateurs et appareils consommateurs, que l'on raccorde à des conducteurs (4) qu'on a installés dans les canalisations (3), et à monter au moins un autre appareillage (6a) tel que socle de prise, commutateur, ou appareil consommateur, dans une seconde pièce (2) contiguë à la première pièce (1), caractérisé en ce qu'on pratique derrière une canalisation (3) de la première pièce (1) un passage (13) à travers une cloison (12) séparant la première (1) et la seconde (2) pièce, on place un boîtier (16) sur ce passage (13) dans la seconde pièce (2), on établit à travers le passage (13) une dérivation électrique (23) depuis les conducteurs (4) de ladite canalisation (3) vers le boîtier (16), et on fixe ledit autre appareillage (6a) sur le boîtier (16) avec raccordement électrique de l'autre appareillage (6a) avec la dérivation (23) dans le boîtier (16).

2. Procédé selon la revendication 1, caractérisé en ce qu'on monte dans la seconde pièce (2) une canalisation (74) partant du boîtier (16) et un second appareillage (6a) sur cette canalisation (74).

3. Dispositif de raccordement électrique pour raccorder électriquement dans des locaux des conducteurs de distribution électrique et un appareillage tel que socle de prise, commutateur ou appareil consommateur, en particulier selon le procédé de l'une des revendications 1 ou 2, ce dispositif comprenant une enceinte (16) qui comporte un fond (17) fixable à une paroi (12) des locaux et renferme une embase de branchement (24) adaptée à supporter des raccordements électriques entre d'une part les conducteurs de distribution (23) et d'autre part l'appareillage (6a), l'enceinte (16) portant des moyens de fixation extérieure de l'appareillage (6a) et des moyens pour le passage de pièces de contact (7) entre les raccordements électriques et l'appareillage, caractérisé en ce que l'enceinte est un boîtier support (16) dont le fond est traversé par au moins une ouverture (18) pour permettre le passage des conducteurs entre une cavité (13) de la paroi (12) des locaux et l'embase (24).

4. Dispositif de raccordement électrique selon la revendication 3, caractérisé en ce que l'embase comporte des moyens de guidage (37, 38) pour des organes (42, 43) de fixation du boîtier (16) à la paroi (12) des locaux, et le fond (17) du boîtier (16) comporte en coïncidence avec lesdits moyens de guidage (37, 38) des ouvertures (36) pour ces organes de fixation (42, 43).

5. Dispositif de raccordement électrique selon la revendication 3 ou 4, caractérisé en ce que le fond (17) est traversé par une seconde ouverture (18) de passage des conducteurs (23), les deux ouvertures étant situées de part et d'autre de l'ambase (24).

6. Dispositif de raccordement électrique selon l'une des revendications 3 à 5, caractérisé en ce que l'embase comporte en regard d'une ouverture (61) à travers un capot (56) de recouvrement de l'embase (24) un bossage taraudé (63) de fixation de l'appareillage (6a).

7. Dispositif de raccordement électrique selon la revendication 3 ou 4, caractérisé en ce que le boîtier (16) comprend un capotage latéral (54) qui recouvre l'ouverture du fond (18) et forme saillie relativement à un emplacement (58) de fixation de l'appareillage (6a).

8. Dispositif de raccordement électrique selon l'une des revendications 3 à 5, caractérisé en ce que le boîtier définit un emplacement évidé (58) de fixation de l'appareillage (6a), cet emplacement étant étagé et présentant une région surélevée définie par un capot de recouvrement de l'embase (56).

9. Dispositif de raccordement électrique selon la revendication 7, caractérisé en ce que le capotage latéral (54) et un capot (56) de recouvrement de l'embase (24) appartiennent à un couvercle (53) mobile relativement au fond (17).

10. Dispositif de raccordement électrique selon la revendication 9, caractérisé en ce que le couvercle (53) est articulé à un corps (17, 32) du boîtier (53), ledit corps incluant le fond (17) du boîtier (16), par un axe (57) reliant le capotage latéral (54) au corps (17, 32) à distance du capot (56) de recouvrement de l'embase.

11. Dispositif de raccordement électrique selon la revendication 10, caractérisé en ce que le capotage latéral (54) comprend deux capots (56) reliés l'un à l'autre par le capot (56) de recouvrement de l'embase (24).

12. Dispositif de raccordement électrique selon l'une des revendications 8 à 11, caractérisé en ce qu'en dehors de la région surélevée (56), l'emplacement (58) de fixation de l'appareillage est, du côté de la paroi (12) des locaux, délimité par le fond (17).

0292380

FIG_1

FIG_2

FIG_3

FIG_4

0292380

FIG_5

0292380

FIG_7

0292380

FIG.6

FIG.8

FIG.9

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | DE-C- 159 554 (TEHALIT) <br> * Page 8, lignes 5-11; figures 1,11 * <br> --- | 1,3 | H 01 R 25/16 |
| D,A | FR-A-2 457 584 (LA TELEMECANIQUE) <br> * Page 4, lignes 34-40; page 5, ligne 1; figure 6 * <br> ----- | 3 | |

**DOMAINES TECHNIQUES RECHERCHES (Int. Cl.4)**

H 01 R 25/00
H 02 G 3/00

**Le présent rapport a été établi pour toutes les revendications**

| Lieu de la recherche | Date d'achèvement de la recherche | Examinateur |
|---|---|---|
| LA HAYE | 17-07-1988 | CERIBELLA G. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

 

& : membre de la même famille, document correspondant

EPO FORM 1503 03.82 (P0402)